# EUROPEAN PATENT SPECIFICATION

(11) **EP 4 570 415 B1**
(45) Date of publication and mention of the grant of the patent: **15.07.2026**
(21) Application number: 23892757.8
(22) Date of filing: 18.12.2023
(51) Int. Cl.: B23K 26/21, B23K 26/70, B23K 26/03, B23K 26/046, B23K 26/082, B23K 31/12, B23K 26/08, B23K 101/36

(54) **WELDING SYSTEM AND SPOT CHECK METHOD FOR A WELDING SYSTEM**
SCHWEISSSYSTEM UND STICHPROBENVERFAHREN FÜR EIN SCHWEISSSYSTEM
SYSTÈME DE SOUDAGE ET MÉTHODE DE CONTRÔLE PONCTUEL POUR UN SYSTÈME DE SOUDAGE

(30) Priority: 08.10.2023 CN 202311289467
(43) Date of publication of application: 18.06.2025
(73) Proprietor: Contemporary Amperex Technology (Hong Kong) Limited, Central, Central And Western District (HK)
(72) Inventor: LI, Yingjun, Ningde, Fujian 352100 (CN); QI, Congcheng, Ningde, Fujian 352100 (CN); ZHENG, Shixiong, Ningde, Fujian 352100 (CN); LI, Jian, Ningde, Fujian 352100 (CN); ZHAO, Qiangguo, Ningde, Fujian 352100 (CN); YE, Xiupeng, Ningde, Fujian 352100 (CN); ZHANG, Xu, Ningde, Fujian 352100 (CN)
(74) Representative: Gong, Jinping
(86) International application number: PCT/CN2023/139503
(87) International publication number: WO 2025/076998

(56) References cited:
- WO-A1-2018/040912
- WO-A1-2022/142099
- CN-A- 113 305 424
- CN-A- 113 305 424
- CN-A- 114 951 992
- CN-A- 114 985 931
- CN-A- 115 255 626
- CN-A- 117 020 411
- CN-B- 114 367 741
- CN-U- 215 658 430
- GB-A- 2 605 408

## Description

The present invention relates to, without limitation, the field of welding technologies for battery products, and in particular, to a welding system and a spot check method for a welding system, see claims 1 and 6.

### Background Art

New energy batteries are increasingly widely applied in life and industry, for example, new energy vehicles equipped with the batteries have been used widely. In addition, batteries are also increasingly applied in the field of energy storage, etc.

In a process of producing a battery product, the welding of posts is a very important step, which allows a plurality of battery cells in the battery product to be electrically connected using busbars in a cell connection system (CCS). However, during the welding of the posts, due to an inappropriate distance between a laser galvanometer and a post in the battery product to be welded, it may lead to a poor welding quality, affecting a product yield.

CN114985931A (describing the preamble of claims 1 and 6) shows power battery module welding equipment and a welding method thereof. GB2605408A discloses a laser welding process.

### Summary of the Invention

In view of this, the present invention defines a welding system and a spot check method for a welding system according to claims 1 and 6, which make it possible to determine a more appropriate position adjustment amount for a laser galvanometer in a welding device, resulting in a more appropriate distance between the position-adjusted laser galvanometer and a post in a battery product to be welded, thus improving a welding quality of the battery product and increasing a product yield.

Further preferred embodiments of the present invention are defined in the dependent claims.

It should be understood that the above general descriptions and the detailed description hereinafter are merely exemplary and illustrative, and do not limit the technical solutions of the present disclosure.

### Brief Description of the Drawings

The drawings herein are incorporated into the description and form a part of the description, and these drawings illustrate the embodiments conforming to the present invention and are intended to explain the technical solutions of the present invention together with the description.
FIG. 1 is a schematic diagram of a composition structure of a welding system;
FIG. 2 is a schematic diagram I of a structure of a calibration block;
FIG. 3 is a schematic diagram II of a structure of a calibration block;
FIG. 4 is a schematic diagram I of an implementation process of a spot check method for a welding system;
FIG. 5 is a schematic diagram II of an implementation process of a spot check method for a welding system; and
FIG. 6 is a schematic diagram of a distribution of at least two posts selected from a battery product for ranging in a spot check method for a welding system.

### Detailed Description of Embodiments

In order to make the purposes, technical solutions and advantages of the present invention clearer, the technical solutions of the present invention are further explained in detail below in conjunction with the accompanying drawings and embodiments, and the described embodiments shall not be regarded as limitations on the present invention.

In the following description, the phrase "some embodiments" is involved, which describe a subset of all possible embodiments. However, it may be understood that the phrase "some embodiments" may be the same subset or different subsets of all the possible embodiments, and may be combined with each other without conflicts.

The terms "first/second/third" involved are only intended to distinguish between similar objects and do not represent a particular order of the objects. It may be understood that particular sequences or sequential orders indicated by the terms "first/second/third" may be interchanged if permitted, so that the embodiments of the present disclosure described herein can be implemented in an order other than that illustrated or described herein.

Unless otherwise defined, all technical and scientific terms used herein have the same meanings as those commonly understood by those skilled in the art to which the present disclosure belongs. The terms used herein are merely for the purpose of describing the present disclosure, but are not intended to limit the present disclosure.

Currently, new energy batteries are increasingly widely applied in life and industry. The new energy batteries are not only used in energy storage power systems such as hydraulic power, thermal power, wind power and solar power stations, but also widely used in electric vehicles such as electric bicycles, electric motorcycles, and electric automobiles and in many fields such as aerospace. With the continuous expansion of the application field of power batteries, the market demand for the power batteries is also expanding.

In the embodiments of the present invention, a battery may be a battery cell. The battery cell refers to a basic unit capable of implementing mutual conversion between chemical energy and electrical energy. It can be used to form a battery module or a battery pack for use in supplying power to a power consuming apparatus. The battery cell may be a secondary battery. The secondary battery refers to a battery cell of which active materials can be activated by means of charging for reuse after the battery cell is discharged. The battery cell may be a lithium ion battery, a sodium ion battery, a sodium-lithium ion battery, a lithium metal battery, a sodium metal battery, a lithium-sulfur battery, a magnesium ion battery, a nickel-metal hydride battery, a nickel-cadmium battery, a lead accumulator, etc., which is not limited in the embodiments of the present disclosure.

The embodiments of the present invention are described in detail below.

Battery products are increasingly widely applied in life and industry. The battery products are not only used in energy storage power systems such as hydraulic power, thermal power, wind power and solar power stations, but also widely used in electric vehicles such as electric bicycles, electric motorcycles and electric automobiles and in many fields such as aerospace.

In a process of producing a battery product, posts of two adjacent battery cells in the battery product may be welded together through a busbar by means of a welding process, thereby implementing series and parallel electrical connections of various battery cells in the battery product. During the welding of the posts, due to an inappropriate distance between a laser galvanometer and a post in the battery product to be welded, it may lead to a poor welding quality, affecting a product yield. In some related technologies, the position of the laser galvanometer can be adjusted to compensate for a deviation in the distance between the laser galvanometer and the post in the battery product to be welded, i.e., to perform a defocus amount compensation for the laser galvanometer. However, it is difficult to accurately determine a position adjustment amount for the laser galvanometer in the related technologies, resulting in an imprecise defocus amount compensation, thus affecting a product quality.

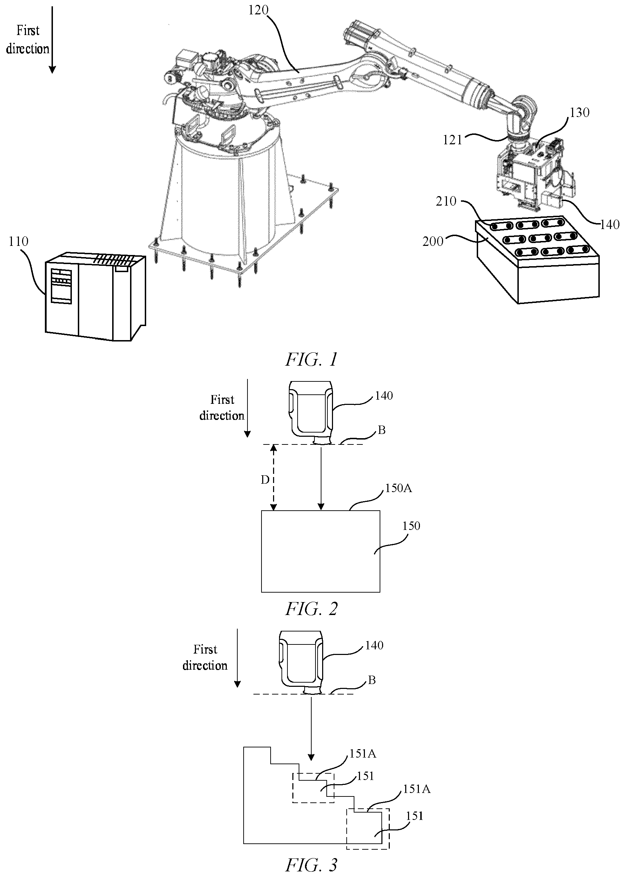

An embodiment provides a welding system for use in a welding operation during a process of producing a battery product. FIG. 1 is a schematic diagram of a composition structure of a welding system. As shown in FIG. 1, the welding system includes: a controller 110, a robot 120, a laser galvanometer 130, and a rangefinder 140.

The rangefinder 140 and the laser galvanometer 130 are both connected to a drive end 121 of the robot 120 in a driven manner, and the rangefinder 140 is at a fixed distance from the laser galvanometer 130 in a first direction, the first direction being parallel to an optical axis of the laser galvanometer 130.

The robot 120 is configured to drive the rangefinder 140 to perform ranging, along the first direction, of at least two posts 210 in a battery product 200 to be welded, so as to obtain a set of ranging values between the at least two posts 210 and the rangefinder 140; and the rangefinder 140 is calibrated based on a first position in the first direction, the first position being a position of a focal point of the laser galvanometer 130 in the first direction.

The controller 110 is configured to: determine a first offset of a welding surface of the battery product 200 relative to the focal point based on the set of ranging values; and determine a first position adjustment amount for the laser galvanometer 130 in the first direction based on the first offset and a first defocus amount corresponding to a current welding process.

The robot 120 is further configured to: drive, based on the first position adjustment amount, the laser galvanometer 130 to be subjected to a position adjustment in the first direction; and drive the position-adjusted laser galvanometer 130 to move perpendicularly to the first direction, so as to weld the at least two posts 210.

Herein, the battery product may include a plurality of battery cells, and each battery cell may have a positive post and a negative post. For example, the battery cell may be referred to as a cell.

In some implementations, the battery product may be a battery module composed of a plurality of battery cells. For example, the battery module may be a new energy power battery module.

In some implementations, the battery product may be a battery pack composed of a plurality of battery cells or battery modules. For example, the battery pack may be a new energy power battery pack.

During implementation, those skilled in the art may employ any appropriate rangefinder according to an actual situation, which is not limited in the embodiments of the present invention. In some implementations, the rangefinder may be a laser rangefinder.

It may be understood that, the laser galvanometer 130 and the rangefinder 140, as a whole, may be connected to the drive end 121 of the robot 120 in a driven manner. In this way, the robot 120 can drive the laser galvanometer 130 and the rangefinder 140 to move synchronously, and the rangefinder 140 is thus at a fixed distance from the laser galvanometer 130 in the first direction.

The robot 120 can drive the rangefinder 140 to move, perpendicularly to the first direction, to a position directly facing a post along the first direction, and control the rangefinder 140 to perform ranging of the post at this position along the first direction, so as to obtain a ranging value between the post and the rangefinder 140. As such, the set of ranging values between the at least two posts and the rangefinder 140 can be obtained by sequentially performing ranging of the at least two posts 210 in the battery product 200 to be welded.

In some implementations, the first direction may be a direction that is parallel to the optical axis of the laser galvanometer 130 and directed from the rangefinder 140 toward an upper surface of the battery product 200. For example, the rangefinder 140 and the laser galvanometer 130 are located above the battery product 200, and the first direction may be a vertical downward direction.

Prior to the ranging of the post, the rangefinder 140 can be calibrated based on the position of the focal point of the laser galvanometer 130 in the first direction. During implementation, the rangefinder 140 can be calibrated in advance using a qualified battery product, and with the focal point of the laser galvanometer 130 being aligned with a post in the qualified battery product, a distance between the post and the rangefinder 140 is measured and then used as a reference distance, i.e., a distance between the calibrated rangefinder 140 and the focal point of the laser galvanometer 130.

During implementation, the controller 110 can determine the first offset of the welding surface of the battery product 200 relative to the focal point based on the set of ranging values in any suitable manner. . The welding surface of the battery product 200 refers to a plane formed by an upper end of each post 210 in the battery product 200. As there may be a height difference between the posts 210 in the battery product 200, and the battery product 200 itself may also be tilted, the welding surface of the battery product 200 may have a certain first offset relative to the focal point of the laser galvanometer 130. The first offset of the welding surface of the battery product 200 relative to the focal point may be estimated based on the set of ranging values for the at least two posts 210 in the battery product 200, so as to obtain the estimated first offset.

In some implementations, the first offset may be determined based on a difference between a first statistical value of all ranging values in the set of ranging values and the reference distance, where the reference distance is a distance between the calibrated rangefinder and the focal point, and the first statistical value includes a midrange and/or a first statistical quantile.

The first defocus amount corresponding to the current process refers to a distance between the focal point of the laser galvanometer 130 and the welding surface of the battery product 200 to be welded that is required to meet a requirement of the current process. During implementation, the first defocus amount corresponding to the current process can be preset according to an actual situation.

After the controller 110 determines the first position adjustment amount for the laser galvanometer 130 in the first direction, the robot 120 can drive the laser galvanometer 130 to be subjected to the position adjustment in the first direction based on the first position adjustment amount, so that a distance between the focal point of the position-adjusted laser galvanometer 130 and the welding surface of the battery product 200 to be welded meets the requirement of the current process. The first position adjustment amount may be a positive value, may be a negative value, or may be zero.

After driving the laser galvanometer 130 to be subjected to the position adjustment in the first direction based on the first position adjustment amount, the robot 120 may also drive the position-adjusted laser galvanometer 130 to move, perpendicularly to the first direction, to a position directly above the posts 210 of the battery product 200 to be welded, so as to weld the posts 210. It may be understood that, the position of the laser galvanometer 130 in the first direction is always kept unchanged during a process in which the robot 120 drives the position-adjusted laser galvanometer 130 to weld the at least two posts 210 in the battery product 200 to be welded.

In this embodiment of the present invention, the set of ranging values between the rangefinder and the at least two posts in the battery product to be welded is obtained, where the set of ranging values is obtained by the rangefinder through ranging of the at least two posts along a first direction after the rangefinder is calibrated based on a first position in the first direction, the first direction being parallel to an optical axis of a laser galvanometer, the first position being a position of a focal point of the laser galvanometer in the first direction, and the rangefinder being at a fixed distance from the laser galvanometer in the first direction; the first offset of the welding surface of the battery product relative to the focal point is determined based on the set of ranging values; and the first position adjustment amount for the laser galvanometer in the first direction is determined based on the first offset and the first defocus amount corresponding to the current welding process. In this way, since the first offset of the welding surface of the battery product relative to the focal point of the laser galvanometer is determined based on the set of ranging values between the rangefinder and the at least two posts in the battery product, the first offset has a higher accuracy; in addition, during the process of determining the first position adjustment amount for adjusting the laser galvanometer, the first offset and the first defocus amount corresponding to the current welding process are both considered, so that a more appropriate position adjustment amount can be determined for the laser galvanometer in a welding device, resulting in a more appropriate distance between the position-adjusted laser galvanometer and the post in the battery product to be welded, thus improving the welding quality of the battery product and increasing the product yield.

In some embodiments, the controller 110 is further configured to perform at least one of operations of:
sending, if a target parameter meets a preset condition, a welding instruction to the robot 120 to cause the robot 120 to drive the position-adjusted laser galvanometer 130 to move perpendicularly to the first direction, so as to weld the at least two posts 210, the target parameter including at least one of the following: the set of ranging values, the first offset, and the first position adjustment amount; and outputting prompt information if the target parameter does not meet the preset condition.

The preset condition may be any preset appropriate condition for fool-proofing management and control of a value of the target parameter, which is not limited in the embodiments of the present disclosure.

In some implementations, if the target parameter includes the set of ranging values, the preset condition may include, but is not limited to, at least one of the following: each ranging value in the set of ranging values being within a preset ranging value scope, a range of all ranging values in the set of ranging values being within a preset range scope, an average of all the ranging values in the set of ranging values being within a preset average scope, etc.

In some implementations, if the target parameter includes the first offset, the preset condition may include, but is not limited to, the first offset of the welding surface of the battery product 200 relative to the focal point being within a preset offset scope.

In some implementations, if the target parameter includes the first position adjustment amount, the preset condition may include, but is not limited to, the first position adjustment amount being within a preset first adjustment amount scope.

The prompt information may be any appropriate information for providing an operator with a prompt that the current target parameter does not meet the preset condition. After being informed of the prompt information, the operator may perform a manual intervention to check whether there is a large deviation in a placement position of the battery product 200 to be welded and/or the battery cell in the battery product 200, or to make a manual adjustment to the placement position of the battery product 200 to be welded and/or the battery cell in the battery product 200, etc., so that a target parameter determined after the adjustment meets the preset condition.

In the above embodiment, if the target parameter meets the preset condition, the welding instruction is sent to the robot to cause the robot to drive the position-adjusted laser galvanometer to move perpendicularly to the first direction, so as to weld the at least two posts; and the prompt information is output if the target parameter does not meet the preset condition. In this way, the fool-proofing management and control of the target parameter can be added to the welding process of the posts, thereby making it possible to further improve the welding quality of the battery product.

In some embodiments, if the target parameter includes the set of ranging values, the preset condition includes at least one of the following: a range of all ranging values in the set of ranging values being within a preset range scope; and a first distance difference corresponding to each ranging value in the set of ranging values being within a preset first distance difference scope, where the first distance difference corresponding to the ranging value is a distance difference between the ranging value and a reference distance, and the reference distance is a distance between the calibrated rangefinder and the focal point.

In some embodiments, if the target parameter includes the first offset, the preset condition includes: the first offset being within a preset offset scope.

In some embodiments, if the target parameter includes the first position adjustment amount, the preset condition includes: the first position adjustment amount being within a preset first adjustment amount scope.

During implementation, the above range scope, first distance difference scope, offset scope, and first adjustment amount scope can all be preset by those skilled in the art according to an actual situation, which are not limited in the embodiments of the present disclosure.

In some embodiments, the target parameter includes the first position adjustment amount, and the preset condition includes at least one of the following: a difference between a second position adjustment amount and the first position adjustment amount being within an adjustment difference scope, and a second distance difference corresponding to each ranging value in the set of ranging values being within a preset second distance difference scope, where the second distance difference corresponding to the ranging value is a sum of a first distance difference corresponding to the ranging value and the second position adjustment amount.

The robot 120 is further configured to: before subjecting the laser galvanometer 130 to the position adjustment in the first direction, drive the rangefinder 140 to perform ranging, along the first direction, of a preset ranging point, so as to obtain a first ranging value; and after subjecting the laser galvanometer 130 to the position adjustment in the first direction, drive the rangefinder 140 to perform ranging, along the first direction, of the preset ranging point, so as to obtain a second ranging value.

The controller 110 is further configured to determine the second position adjustment amount based on a difference between the second ranging value and the first ranging value.

Herein, the first distance difference for a post is a distance difference between the ranging value corresponding to the post and the reference distance, i.e., a theoretical distance offset of the post relative to the focal point of the laser galvanometer 130.

It may be understood that, there may be a control error in the process in which the robot 120 drives the laser galvanometer 130 to be subjected to the position adjustment in the first direction based on the first position adjustment amount, resulting in an adjustment difference between the first position adjustment amount and an actual amount of movement of the laser galvanometer 130 in the first direction that is caused by the position adjustment of the laser galvanometer 130 in the first direction.

The preset ranging point may be a ranging point that is fixed in a welding station. The first ranging value is obtained by the rangefinder 140 through the ranging, along the first direction, of the preset ranging point before the position adjustment of the laser galvanometer 130 in the first direction, the second ranging value is obtained by the rangefinder 140 through the ranging, along the first direction, of the preset ranging point after the position adjustment of the laser galvanometer 130 in the first direction, and the second position adjustment amount is determined based on the difference between the second ranging value and the first ranging value. Therefore, the second position adjustment amount can represent an actual amount of movement of the laser galvanometer 130 in the first direction that is caused by the position adjustment of the laser galvanometer 130 in the first direction. In addition, since the rangefinder 140 is at a fixed distance from the laser galvanometer 130 in the first direction, the second position adjustment amount also represents the actual amount of movement of the laser galvanometer 130 in the first direction that is caused by the position adjustment of the laser galvanometer 130 in the first direction. Thus, a difference between the second position adjustment amount and the first position adjustment amount can represent the adjustment difference between the first position adjustment amount and the actual amount of movement of the laser galvanometer 130 in the first direction that is caused by the position adjustment of the laser galvanometer 130 in the first direction; and the sum of the first distance difference for a post and the second position adjustment amount can represent an actual distance offset of the post relative to the focal point of the laser galvanometer 130. In this way, the welding quality of the battery product can be further improved by performing fool-proofing management and control of the adjustment difference and/or the actual distance offset corresponding to each post.

During implementation, the adjustment difference scope and the second distance difference scope can both be preset by those skilled in the art according to an actual situation, which are not limited in the embodiments of the present disclosure.

In some implementations, the adjustment difference scope is ± 0.2 millimeters (mm).

In some embodiments, referring to FIG. 2, the welding system further includes a calibration block 150 fixedly disposed in the welding station. In the first direction, an upper surface 150A of the calibration block 150 is at a preset check distance D from a preset check position B.

The controller 110 is further configured to: send a check instruction to the robot 120; obtain a third ranging value that is obtained by the rangefinder 140 through ranging of the upper surface 150A of the calibration block 150; determine a check result for the rangefinder 140 based on the third ranging value and the check distance; and obtain the set of ranging values between the at least two posts and the rangefinder 140 if the check result represents a check success.

The robot 120 is further configured to: in response to the check instruction, drive the rangefinder 140 to move, in the first direction, to the check position B and then perform ranging of the upper surface 150A of the calibration block 150.

The calibration block can be fixedly disposed at any appropriate position in the welding station. The check position B may be any preset appropriate position in the first direction. After the check position B and the check distance D are determined, the position of the calibration block remains unchanged. If the position of the calibration block changes, a recalibration is required to determine the check distance D between the upper surface 150A of the calibration block 150 and the preset check position B.

The position of the calibration block 150 can be determined according to an actual situation, which is not limited in the embodiments of the present disclosure. For example, the calibration block 150 can be disposed near an edge in the welding station.

In some implementations, the calibration block 150 can be fixed and clamped by a fixture that is fixed in the station.

It may be understood that, the third ranging value is a distance, in the first direction, between the upper surface 150A of the calibration block 150 and the check position B that is measured by the rangefinder 140, and the check distance is an actual distance, in the first direction, between the upper surface 150A of the calibration block 150 and the check position B. Through a comparison between the third ranging value and the check distance, the rangefinder can be checked for the positional stability and/or ranging accuracy, etc. thereof. For example, if a difference between the third ranging value and the check distance is within a preset check difference scope, it can be determined that the check of the rangefinder 140 succeeds; and if the difference between the third ranging value and the check distance exceeds the check difference scope, it can be determined that the check of the rangefinder 140 fails. For example, the check difference scope may be ± 0.2 mm.

During implementation, the controller 110 may send the check instruction to the robot 120 prior to welding of posts in each battery product, so as to check the rangefinder using the calibration block, or the controller 110 may send the check instruction to the robot 120 prior to each operation, so as to check the rangefinder using the calibration block.

If the check result represents the check success, the controller 110 may send a ranging instruction to the robot 120 to cause the robot 120 to, in response to the ranging instruction, drive the rangefinder 140 to perform the ranging, along the first direction, of the at least two posts 210 in the battery product 200 to be welded, so as to obtain the set of ranging values for the at least two posts 210.

In some implementations, the check of the rangefinder 140 may be repeated a preset number of times, and the controller 110 may obtain the set of ranging values between the at least two posts and the rangefinder 140 if results of the preset number of checks each represent a check success. For example, the preset number of times may be 5, 10, or 15, etc.

In the above embodiment, prior to obtaining the set of ranging values between the rangefinder and the at least two posts in the battery product to be welded, the rangefinder is checked using the calibration block fixedly disposed in the welding station, and the set of ranging values between the at least two posts and the rangefinder is obtained if the check result represents the check success. In this way, ranging inaccuracies caused by rangefinder loosening and/or an abnormal ranging accuracy can be reduced, so that a more appropriate position adjustment amount can be determined for the laser galvanometer in the welding device, thereby further improving the welding quality of the battery product.

In some embodiments, referring to FIG. 3, the calibration block 150 has a plurality of steps 151, and in the first direction, an upper surface 151A of each step 151 is at a preset check distance from the check position B.

The controller 110 is further configured to: obtain a third set of ranging values that is obtained by the rangefinder 140 through ranging of the upper surface 151A of at least one step 151; and determine a check result for the rangefinder 140 based on the third set of ranging values and the respective check distance corresponding to the upper surface 151A of the at least one step 151.

The robot 120 is further configured to: in response to the check instruction, drive the rangefinder 140 to move, in the first direction, to the check position and then perform ranging of the upper surface 151A of each of the at least one step 151.

During implementation, the upper surface 151A of each step 151 is at a corresponding check distance from the check position. For the upper surface 151A of each step 151, the robot can drive the rangefinder to move to a position directly above the step 151 and at the check position in the first direction, so as to perform ranging of the upper surface 151A of the step 151.

In some implementations, all the steps 151 of the calibration block may have the same height. For example, the calibration block 150 has five steps 151, and each step may have a height of 2 mm, where upper surfaces 151A of the five steps 151 may respectively correspond to check distances of -4 mm, -2 mm, 0 mm, 2 mm, and 4 mm.

In some implementations, all the steps 151 of the calibration block may have different heights.

In the above embodiment, the rangefinder can be checked for the ranging accuracy thereof at a plurality of check distances using the calibration block having a plurality of steps, which can improve the accuracy of checking the rangefinder, and thus further improve the accuracy of ranging carried out by the rangefinder.

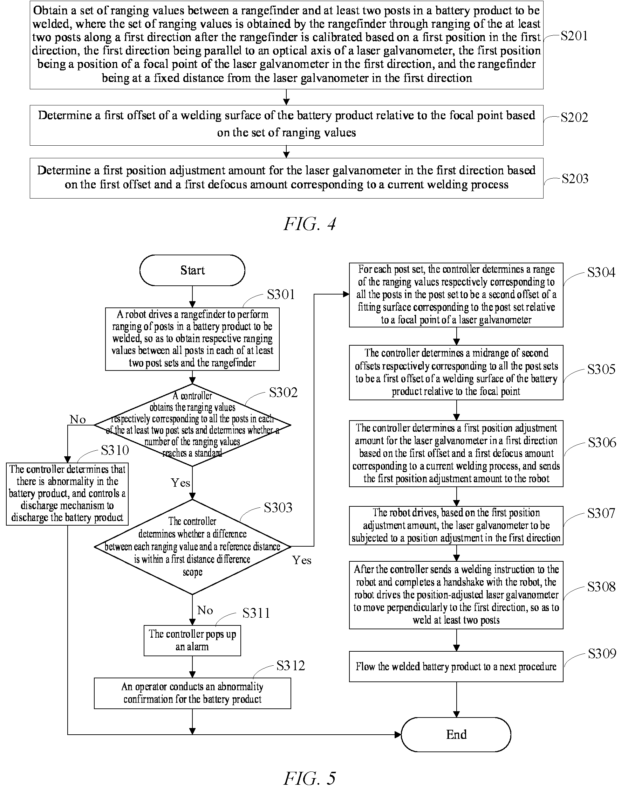

Based on the above welding system provided in this embodiment of the present invention, an embodiment of the present invention provides a spot check method for a welding system, which method can be performed by the controller 110 in the welding system. During implementation, the controller 110 may be, for example, an industrial personal computer, a programmable logic controller (PLC), etc. FIG. 4 is a schematic diagram I of an implementation process of a spot check method for a welding system according to an embodiment of the present disclosure. As shown in FIG. 4, the method may include steps S201 to S203 below.

Step S201: Obtain a set of ranging values between a rangefinder and at least two posts in a battery product to be welded, where the set of ranging values is obtained by the rangefinder through ranging of the at least two posts along a first direction after the rangefinder is calibrated based on a first position in the first direction, the first direction being parallel to an optical axis of a laser galvanometer, the first position being a position of a focal point of the laser galvanometer in the first direction, and the rangefinder being at a fixed distance from the laser galvanometer in the first direction.

Step S202: Determine a first offset of a welding surface of the battery product relative to the focal point based on the set of ranging values.

Step S203: Determine a first position adjustment amount for the laser galvanometer in the first direction based on the first offset and a first defocus amount corresponding to a current welding process.

In some implementations, the first position adjustment amount for the laser galvanometer in the first direction can be determined based on a difference between the first defocus amount and the first offset. In this way, a distance between the laser galvanometer adjusted based on the first position adjustment amount and each of posts to be welded can approach the first defocus amount, thereby making it possible to well satisfy the current welding process.

In this embodiment of the present invention, the set of ranging values between the rangefinder and the at least two posts in the battery product to be welded is obtained, where the set of ranging values is obtained by the rangefinder through ranging of the at least two posts along a first direction after the rangefinder is calibrated based on a first position in the first direction, the first direction being parallel to an optical axis of a laser galvanometer, the first position being a position of a focal point of the laser galvanometer in the first direction, and the rangefinder being at a fixed distance from the laser galvanometer in the first direction; the first offset of the welding surface of the battery product relative to the focal point is determined based on the set of ranging values; and the first position adjustment amount for the laser galvanometer in the first direction is determined based on the first offset and the first defocus amount corresponding to the current welding process. In this way, since the first offset of the welding surface of the battery product relative to the focal point of the laser galvanometer is determined based on the set of ranging values between the rangefinder and the at least two posts in the battery product, the first offset has a higher accuracy; in addition, during the process of determining the first position adjustment amount for adjusting the laser galvanometer, the first offset and the first defocus amount corresponding to the current welding process are both considered, so that a more appropriate position adjustment amount can be determined for the laser galvanometer in a welding device, resulting in a more appropriate distance between the position-adjusted laser galvanometer and the post in the battery product to be welded, thus improving the welding quality of the battery product and increasing the product yield.

In some embodiments, step S202 above may include: determining the first offset based on a difference between a first statistical value of all ranging values in the set of ranging values and a reference distance, where the reference distance is a distance between the calibrated rangefinder and the focal point, and the first statistical value includes a midrange and/or a first statistical quantile. Herein, the first statistical quantile may include, but is not limited to, a quartile, a quintile, or an octile, etc. The midrange refers to a value obtained by averaging a maximum value and a minimum value.

In the above embodiment, the first offset of the welding surface of the battery product relative to the focal point of the laser galvanometer can be determined more accurately based on a difference between the midrange of all the ranging values in the set of ranging values and the reference distance and/or the difference between the first statistical quantile of all the ranging values and the reference distance.

In some embodiments, step S202 above may include steps S211 to S213 below.

Step S211: Determine at least two post sets based on the at least two posts, each of the post sets including at least three posts, and the at least three posts in the post set corresponding to one fitting surface.

Herein, the at least two post sets may be formed by selection from the at least two posts in any suitable manner.

During implementation, all the posts in the post set can be fitted into one surface, i.e., the fitting surface corresponding to the post set.

In some implementations, fitting surfaces respectively corresponding to all the post sets may cover an upper surface of the battery product.

Step S212: For each of the post sets, determine, from the set of ranging values, post ranging values respectively corresponding to all posts in the post set, and determine, based on all the post ranging values, a second offset of the fitting surface corresponding to the post set relative to the focal point.

Herein, the second offset of the fitting surface corresponding to the post set relative to the focal point can be determined based on the post ranging values respectively corresponding to all the posts in the post set in any suitable manner.

In some implementations, a surface ranging value for the fitting surface corresponding to the post set can be determined based on the post ranging values respectively corresponding to all the posts in the post set, and the second offset of the fitting surface relative to the focal point can be determined based on a difference between the surface ranging value and the reference distance. For example, a maximum value in the post ranging values respectively corresponding to all the posts in the post set may be determined as the surface ranging value for the fitting surface corresponding to the post set, or a minimum value in the post ranging values respectively corresponding to all the posts in the post set may be determined as the surface ranging value for the fitting surface corresponding to the post set, or an average of the maximum value and the maximum value in the post ranging values respectively corresponding to all the posts in the post set may be determined as the surface ranging value for the fitting surface corresponding to the post set.

In some implementations, a third statistical value of the post ranging values respectively corresponding to all the posts in the post set may be determined to be the second offset of the fitting surface corresponding to the post set relative to the focal point. The third statistical value may include, but is not limited to, at least one of a range, a variance, etc.

Step S213: Determine the first offset based on all second offsets.

During implementation, the first offset can be determined based on all the second offsets in any suitable manner, which is not limited in the embodiments of the present disclosure.

For example, a maximum value, a minimum value, an average, a median, or a mode, etc. in all the second offsets may be determined as the first offset.

In the above embodiment, the at least two post sets are determined based on the at least two posts, each of the post sets including at least three posts, and the at least three posts in the post set corresponding to one fitting surface; for each post set, the post ranging values respectively corresponding to all the posts in the post set are determined from the set of ranging values, and the second offset of the fitting surface corresponding to the post set relative to the focal point is determined based on all the post ranging values; and the first offset is determined based on all the second offsets. In this way, the first offset of the welding surface of the battery product relative to the focal point can be estimated more reasonably by determining the respective second offset of the fitting surface corresponding to each post set in the battery product relative to the focal point, so that a more accurate first offset is obtained.

In some embodiments, step S213 above may include: determining the first offset based on a second statistical value of all the second offsets, where the second statistical value includes a midrange and/or a second statistical quantile.

Herein, the second statistical quantile may include, but is not limited to, a quartile, a quintile, or an octile, etc.

In the above embodiment, the first offset of the welding surface of the battery product relative to the focal point of the laser galvanometer can be determined more accurately based on the midrange and/or the second statistical quantile of all the second offsets.

In some embodiments, the determining, based on all the post ranging values, a second offset of the fitting surface corresponding to the post set relative to the focal point in step S212 may include steps S221 to S223 below.

Step S221: Determine the maximum value in all the post ranging values.

Step S222: Determine the minimum value in all the post ranging values.

Step S223: Determine a difference between the maximum value and the minimum value to be the second offset of the fitting surface corresponding to the post set relative to the focal point.

In this way, since the difference between the maximum value and the minimum value in all the post ranging values can well represent the fluctuation between all the post ranging values, the second offset of the fitting surface corresponding to the post set relative to the focal point can be determined more reasonably based on the difference.

In some embodiments, before step S201 above, the method may further include: selecting the at least two posts from all posts of the battery product, the at least two posts including a first number of posts selected in a length direction of the welding surface, and a second number of posts selected in a width direction of the welding surface.

During implementation, each of the first number and the second number may be any suitable number determined according to an actual situation, which is not limited in the embodiments of the present disclosure.

In this way, the first offset of the welding surface of the battery product relative to the focal point of the laser galvanometer can be determined more accurately based on the set of ranging values between the rangefinder and the at least two posts that are selected in the length direction and the width direction of the welding surface.

In some embodiments, the method further includes at least one of steps S231 and S232 below.

Step S231: Send, if a target parameter meets a preset condition, a welding instruction to a robot to cause the robot to drive the position-adjusted laser galvanometer to move perpendicularly to the first direction, so as to weld the at least two posts, the target parameter including at least one of the following: the set of ranging values, the first offset, and the first position adjustment amount.

Step S232: Output prompt information if the target parameter does not meet the preset condition.

In the above embodiment, if the target parameter meets the preset condition, the welding instruction is sent to the robot to cause the robot to drive the position-adjusted laser galvanometer to move perpendicularly to the first direction, so as to weld the at least two posts; and the prompt information is output if the target parameter does not meet the preset condition. In this way, the fool-proofing management and control of the target parameter can be added to the welding process of the posts, thereby making it possible to further improve the welding quality of the battery product.

In some embodiments, if the target parameter includes the set of ranging values, the preset condition includes at least one of the following: a range of all ranging values in the set of ranging values being within a preset range scope; and a first distance difference corresponding to each ranging value in the set of ranging values being within a preset first distance difference scope, where the first distance difference corresponding to the ranging value is a distance difference between the ranging value and a reference distance, and the reference distance is a distance between the calibrated rangefinder and the focal point;
if the target parameter includes the first offset, the preset condition includes: the first offset being within a preset offset scope; and
if the target parameter includes the first position adjustment amount, the preset condition includes: the first position adjustment amount being within a preset first adjustment amount scope.

In this way, management and control of the first offset, the first position adjustment amount and/or the ranging values for the posts can be well implemented.

In some embodiments, the target parameter includes the first position adjustment amount, and the preset condition includes at least one of the following: a difference between a second position adjustment amount and the first position adjustment amount being within an adjustment difference scope, and a second distance difference corresponding to each ranging value in the set of ranging values being within a preset second distance difference scope, where the second distance difference corresponding to the ranging value is a sum of a first distance difference corresponding to the ranging value and the second position adjustment amount.

The method may further include steps S241 and S242 below.

Step S241: Obtain a first ranging value and a second ranging value for a preset ranging point, the first ranging value being obtained by the rangefinder through ranging of the preset ranging point in the first direction before subjecting the laser galvanometer to the position adjustment in the first direction, and the second ranging value being obtained by the rangefinder through ranging of the preset ranging point in the first direction after subjecting the laser galvanometer to the position adjustment in the first direction.

Step S242: Determine the second position adjustment amount based on a difference between the second ranging value and the first ranging value.

In this way, the welding quality of the battery product can be further improved by performing fool-proofing management and control of the difference between the second position adjustment amount and the first position adjustment amount and/or the second distance difference corresponding to each ranging value in the set of ranging values.

In some embodiments, the preset condition includes: a second defocus amount being within a preset defocus amount scope. The method further includes step S251 below.

Step S251: Determine the second defocus amount based on a sum of the second position adjustment amount and the first offset.

Herein, since the second position adjustment amount represents an actual amount of movement of the laser galvanometer in the first direction that is caused by the position adjustment of the laser galvanometer in the first direction, the sum of the second position adjustment amount and the first offset can represent an actual offset of the welding surface of the battery product relative to the focal point after the position adjustment of the laser galvanometer in the first direction, i.e., the second defocus amount. In this way, the welding quality of the battery product can be further improved by performing fool-proofing management and control of the second defocus amount.

During implementation, the defocus amount scope can be preset by those skilled in the art according to an actual situation, which is not limited in the embodiments of the present disclosure.

In some embodiments, the method may further include steps S261 to S263 below.

Step S261: Send a check instruction to the robot, the check instruction being used to instruct the robot to drive the rangefinder to move, in the first direction, to a preset check position and then perform ranging of an upper surface of a calibration block, the calibration block being fixedly disposed in a welding station, and the upper surface being at a preset check distance from the check position in the first direction.

Step S262: Obtain a third ranging value that is obtained by the rangefinder through ranging of the upper surface.

Step S263: Determine a check result for the rangefinder based on the third ranging value and the check distance.

Step S201 above may include step S264 below.

Step S264: Obtain the set of ranging values between the at least two posts and the rangefinder if the check result represents a check success.

In the above embodiment, prior to obtaining the set of ranging values between the rangefinder and the at least two posts in the battery product to be welded, the rangefinder is checked using the calibration block fixedly disposed in the welding station, and the set of ranging values between the at least two posts and the rangefinder is obtained if the check result represents the check success. In this way, ranging inaccuracies caused by rangefinder loosening and/or an abnormal ranging accuracy can be reduced, so that a more appropriate position adjustment amount can be determined for the laser galvanometer in the welding device, thereby further improving the welding quality of the battery product.

In some embodiments, the calibration block has a plurality of steps, and in the first direction, an upper surface of each of the steps is at a preset check distance from the check position. Step S262 above may include step S271 below.

Step S271: Obtain a third set of ranging values that is obtained by the rangefinder through ranging of the upper surface of at least one of the steps.

Step S263 above may include step S272 below.

Step S272: Determine the check result for the rangefinder based on the third set of ranging values and the check distance corresponding to the upper surface of each of the at least one of the steps.

In the above embodiment, the rangefinder can be checked for the ranging accuracy thereof at a plurality of check distances using the calibration block having a plurality of steps, which can improve the accuracy of checking the rangefinder, and thus further improve the accuracy of ranging carried out by the rangefinder.

The application of the embodiments of the present disclosure in an actual scenario is described below.

The embodiments of the present disclosure provide a spot check method for a welding system. FIG. 5 is a schematic diagram II of an implementation process of a spot check method for a welding system according to an embodiment of the present disclosure. As shown in FIG. 5, the method may include steps S301 to S312 below.

Step S301: A robot drives a rangefinder to perform ranging of posts in a battery product to be welded, so as to obtain respective ranging values between all posts in each of at least two post sets and the rangefinder.

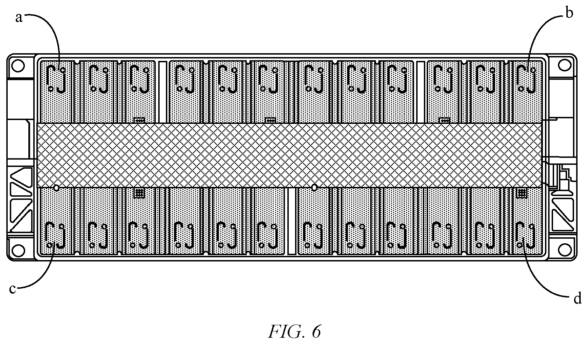

In some implementations, as shown in FIG. 6, posts a, b, c, and d in the battery product may be selected for ranging, and the at least two post sets may include a first post set and a second post set, the first post set including posts a, b, and c, and the second post set including posts b, c, and d.

Step S302: A controller obtains the ranging values respectively corresponding to all the posts in each of the at least two post sets and determines whether a number of the ranging values reaches a standard; and if so, the process proceeds to step S303; otherwise, the process proceeds to step S310.

It may be understood that, the fact that the number of the ranging values respectively corresponding to all the posts in the post set reaches the standard means that the number of the currently obtained ranging values respectively corresponding to all the posts in the post set is equal to a number of all the posts in the post set, that is to say, a ranging value for each post in the post set is obtained.

Step S303: The controller determines whether a difference between each ranging value and a reference distance is within a first distance difference scope; and if so, the process proceeds to step S304; otherwise, the process proceeds to step S311.

For example, the first distance difference scope may be ± 2 mm.

Step S304: For each post set, the controller determines a range of the ranging values respectively corresponding to all the posts in the post set to be a second offset of a fitting surface corresponding to the post set relative to a focal point of a laser galvanometer.

Step S305: The controller determines a midrange of second offsets respectively corresponding to all the post sets to be a first offset of a welding surface of the battery product relative to the focal point.

Step S306: The controller determines a first position adjustment amount for the laser galvanometer in a first direction based on the first offset and a first defocus amount corresponding to a current welding process, and sends the first position adjustment amount to the robot.

Step S307: The robot drives, based on the first position adjustment amount, the laser galvanometer to be subjected to a position adjustment in the first direction.

Step S308: After the controller sends a welding instruction to the robot and completes a handshake with the robot, the robot drives the position-adjusted laser galvanometer to move perpendicularly to the first direction, so as to weld at least two posts.

Step S309: Flow the welded battery product to a next procedure.

Herein, after the welding is completed, the welded battery product may be flowed to the next procedure by an unloading mechanism under the control of the controller, or the welded battery product may be flowed to the next procedure by an operator manually, which is not limited in the embodiments of the present disclosure.

Step S310: The controller determines that there is abnormality in the battery product, and controls a discharge mechanism to discharge the battery product.

Step S311: The controller pops up an alarm.

Step S312: An operator conducts an abnormality confirmation for the battery product.

It may be understood that, in some implementations, after the welding is completed, the robot can drive the rangefinder and the laser galvanometer to move to a preset initial position to initialize a ranging value from the rangefinder.

According to the spot check method for a welding system provided in the embodiments of the present invention, the stability of welding penetration can be improved, and the probability of weak welding and pseudo welding can be reduced, thereby improving the welding quality of the battery product and increasing the product yield.

It should be noted herein that the above descriptions of the embodiments tend to emphasize differences between the embodiments, and for the same or similar parts of the embodiments, reference may be made between the embodiments.

It should be understood that, the phrase "one embodiment" or "an embodiment" mentioned throughout the description means that particular features, structures, or characteristics related to the embodiment are included in at least one embodiment of the present invention. Therefore, the phrase "in one embodiment" or "in an embodiment" presented everywhere throughout the description does not necessarily refer to the same embodiment. Furthermore, these particular features, structures, or characteristics may be combined into one or more embodiments in any suitable manner. It should be understood that, in the embodiments of the present invention, sequence numbers of the foregoing steps/processes do not indicate an execution sequence. The execution sequence of the steps/processes should be determined according to functions and internal logic of the steps/processes, and should not be construed as any limitation on the implementation processes of the embodiments of the present invention. . The sequence numbers of the above embodiments of the present invention are only for description, and do not represent the superiority or inferiority of the embodiments.

It should be noted that, the term "comprise", "include" or any other variant thereof herein is intended to cover a non-exclusive inclusion, so that a process, method, article, or apparatus that includes a series of elements not only includes these elements, but also includes other elements not explicitly listed, or elements that are inherent to such a process, method, article, or apparatus. In the absence of more restrictions, an element defined by a phrase "including one ..." does not exclude the presence of other identical elements in a process, method, article, or apparatus that includes the element.

In the several embodiments provided in the present invention, it should be understood that the disclosed system and method may be implemented in other manners. For example, the division of the units is only a logical functional division, and during practical implementation, there may be another manner for division. For instance: a plurality of units or components may be combined or integrated into another system, or some features may be ignored or not performed. In addition, the displayed or discussed mutual couplings or direct couplings or communication connections between various constituent parts may be implemented through some interfaces. The indirect couplings or communication connections between controllers or units may be implemented in electrical, mechanical, or other forms.

The above units described as separate components may or may not be physically separated. The components shown as units may or may not be physical units. They may be located in one place, or may be distributed over a plurality of network units. Some or all of the units may be selected according to actual requirements to achieve the objectives of the solutions of the embodiments. In addition, all functional units in the embodiments of the present invention may be integrated into one processing unit, or each unit may separately serve as one unit, or two or more units may be integrated into one unit. The above integrated unit may be implemented in a form of hardware, or may be implemented in a form of hardware plus a software functional unit.

The above descriptions are merely the implementations of the present invention, and the scope of protection of the present invention is not limited thereto, but by the scope of protection conferred by the appended claims.

### Industrial applicability

According to the welding system and the spot check method for a welding system in the embodiments of the present invention, since the first offset of the welding surface of the battery product relative to the focal point of the laser galvanometer is determined based on the set of ranging values between the rangefinder and the at least two posts in the battery product, the first offset has a higher accuracy; in addition, during the process of determining the first position adjustment amount for adjusting the laser galvanometer, the first offset and the first defocus amount corresponding to the current welding process are both considered, so that a more appropriate position adjustment amount can be determined for the laser galvanometer in a welding device, resulting in a more appropriate distance between the position-adjusted laser galvanometer and the post in the battery product to be welded, thus improving the welding quality of the battery product and increasing the product yield.

## Claims

1. A welding system, comprising: a controller (110), a robot (120), a laser galvanometer (130), and a rangefinder (140), wherein,
the rangefinder (140) and the laser galvanometer (130) are both connected to a drive end (121) of the robot (120) in a driven manner, and the rangefinder (140) is at a fixed distance from the laser galvanometer (130) in a first direction, the first direction being parallel to an optical axis of the laser galvanometer (130);
the robot (120) is configured to drive the rangefinder (140) to perform ranging, along the first direction, of at least two posts (210) in a battery product (200) to be welded, so as to obtain a set of ranging values between the at least two posts (210) and the rangefinder (140); the rangefinder (140) is calibrated based on a first position in the first direction, the first position being a position of a focal point of the laser galvanometer (130) in the first direction;
**characterised in that**:
the controller (110) is configured to: determine a first offset of a welding surface of the battery product (200) relative to the focal point based on the set of ranging values; and determine a first position adjustment amount for the laser galvanometer (130) in the first direction based on the first offset and a first defocus amount corresponding to a current welding process; and
the robot (120) is further configured to drive, based on the first position adjustment amount, the laser galvanometer (130) to be subjected to a position adjustment in the first direction; and drive the position-adjusted laser galvanometer (130) to move perpendicularly to the first direction, so as to weld the at least two posts (210).

2. The welding system according to claim 1, wherein the controller (110) is further configured to perform at least one of operations of:
sending, if a target parameter meets a preset condition, a welding instruction to the robot (120) to cause the robot (120) to drive the position-adjusted laser galvanometer (130) to move perpendicularly to the first direction, so as to weld the at least two posts (210), the target parameter comprising at least one of the following: the set of ranging values, the first offset, and the first position adjustment amount; and
outputting prompt information if the target parameter does not meet the preset condition.

3. The welding system according to claim 2, wherein the target parameter comprises the first position adjustment amount, and the preset condition comprises at least one of the following: a difference between a second position adjustment amount and the first position adjustment amount being within an adjustment difference scope, and a second distance difference corresponding to each ranging value in the set of ranging values being within a preset second distance difference scope, wherein the second distance difference corresponding to the ranging value is a sum of a first distance difference corresponding to the ranging value and the second position adjustment amount, the first distance difference corresponding to the ranging value is a distance difference between the ranging value and a reference distance, and the reference distance is a distance between the calibrated rangefinder (140) and the focal point;
the robot (120) is further configured to: before subjecting the laser galvanometer (130) to the position adjustment in the first direction, drive the rangefinder (140) to perform ranging, along the first direction, of a preset ranging point, so as to obtain a first ranging value; and after subjecting the laser galvanometer (130) to the position adjustment in the first direction, drive the rangefinder (140) to perform ranging, along the first direction, of the preset ranging point, so as to obtain a second ranging value; and
the controller (110) is further configured to determine the second position adjustment amount based on a difference between the second ranging value and the first ranging value.

4. The welding system according to any one of claims 1 to 3, wherein the welding system further comprises a calibration block (150) fixedly disposed in a welding station, and in the first direction, an upper surface (150A, 151A) of the calibration block (150) is at a preset check distance from a preset check position;
the controller (110) is further configured to: send a check instruction to the robot (120); obtain a third ranging value that is obtained by the rangefinder (140) through ranging of the upper surface (150A, 151A) of the calibration block (150); determine a check result for the rangefinder (140) based on the third ranging value and the check distance; and obtain the set of ranging values between the at least two posts (210) and the rangefinder (140) if the check result represents a check success; and
the robot (120) is further configured to: in response to the check instruction, drive the rangefinder (140) to move, in the first direction, to the check position and then perform ranging of the upper surface (150A, 151A) of the calibration block (150).

5. The welding system according to claim 4, wherein the calibration block (150) has a plurality of steps, and in the first direction, an upper surface (150A, 151A) of each of the steps is at a preset check distance from the check position;
the controller (110) is further configured to: obtain a third set of ranging values that is obtained by the rangefinder (140) through ranging of the upper surface (150A, 151A) of at least one of the steps; and determine a check result for the rangefinder (140) based on the third set of ranging values and the check distance corresponding to the upper surface (150A, 151A) of each of the at least one of the steps; and
the robot (120) is further configured to: in response to the check instruction, drive the rangefinder (140) to move, in the first direction, to the check position and then perform the ranging of the upper surface (150A, 151A) of each of the at least one of the steps.

6. A spot check method for a welding system, the method being **characterised by** the following steps:
obtaining a set of ranging values between a rangefinder (140) and at least two posts (210) in a battery product (200) to be welded, wherein the set of ranging values is obtained by the rangefinder (140) through ranging of the at least two posts (210) along a first direction after the rangefinder (140) is calibrated based on a first position in the first direction, the first direction being parallel to an optical axis of a laser galvanometer (130), the first position being a position of a focal point of the laser galvanometer (130) in the first direction, and the rangefinder (140) being at a fixed distance from the laser galvanometer (130) in the first direction;
determining a first offset of a welding surface of the battery product (200) relative to the focal point based on the set of ranging values; and
determining a first position adjustment amount for the laser galvanometer (130) in the first direction based on the first offset and a first defocus amount corresponding to a current welding process.

7. The spot check method according to claim 6, wherein the determining a first offset of a welding surface of the battery product (200) relative to the focal point based on the set of ranging values comprises:
determining the first offset based on a difference between a first statistical value of all ranging values in the set of ranging values and a reference distance, wherein the reference distance is a distance between the calibrated rangefinder (140) and the focal point, and the first statistical value comprises a midrange and/or a first statistical quantile.

8. The spot check method according to claim 6, wherein the determining a first offset of a welding surface of the battery product (200) relative to the focal point based on the set of ranging values comprises:
determining at least two post (210) sets based on the at least two posts (210), each of the post (210) sets comprising at least three posts (210), and the at least three posts (210) in the post (210) set corresponding to one fitting surface;
for each of the post (210) sets, determining, from the set of ranging values, post (210) ranging values respectively corresponding to all posts (210) in the post (210) set, and determining, based on all the post (210) ranging values, a second offset of the fitting surface corresponding to the post (210) set relative to the focal point; and
determining the first offset based on all second offsets.

9. The spot check method according to claim 8, wherein the determining the first offset based on all second offsets comprises:
determining the first offset based on a second statistical value of all the second offsets, wherein the second statistical value comprises a midrange and/or a second statistical quantile;
and/or
the determining, based on all the post (210) ranging values, a second offset of the fitting surface corresponding to the post (210) set relative to the focal point comprises:
determining a maximum value in all the post (210) ranging values;
determining a minimum value in all the post (210) ranging values; and
determining a difference between the maximum value and the minimum value to be the second offset of the fitting surface corresponding to the post (210) set relative to the focal point.

10. The spot check method according to any one of claims 6 to 9, wherein the determining a first position adjustment amount for the laser galvanometer (130) in the first direction based on the first offset and a first defocus amount corresponding to a current welding process comprises:
determining the first position adjustment amount for the laser galvanometer (130) in the first direction based on a difference between the first defocus amount and the first offset;
and/or
before the obtaining a set of ranging values between a rangefinder (140) and at least two posts (210) in a battery product (200) to be welded, the method further comprises:
selecting the at least two posts (210) from all posts (210) of the battery product (200), the at least two posts (210) comprising a first number of posts (210) selected in a length direction of the welding surface, and a second number of posts (210) selected in a width direction of the welding surface.

11. The spot check method according to any one of claims 6 to 10, wherein the method further comprises at least one of operations of:
sending, if a target parameter meets a preset condition, a welding instruction to a robot (120) to cause the robot (120) to drive the position-adjusted laser galvanometer (130) to move perpendicularly to the first direction, so as to weld the at least two posts (210), the target parameter comprising at least one of the following: the set of ranging values, the first offset, and the first position adjustment amount; and
outputting prompt information if the target parameter does not meet the preset condition.

12. The spot check method according to claim 11, wherein
if the target parameter comprises the set of ranging values, the preset condition comprises at least one of the following: a range of all ranging values in the set of ranging values being within a preset range scope; and a first distance difference corresponding to each ranging value in the set of ranging values being within a preset first distance difference scope, wherein the first distance difference corresponding to the ranging value is a distance difference between the ranging value and a reference distance, and the reference distance is a distance between the calibrated rangefinder (140) and the focal point;
if the target parameter comprises the first offset, the preset condition comprises: the first offset being within a preset offset scope; and
if the target parameter comprises the first position adjustment amount, the preset condition comprises: the first position adjustment amount being within a preset first adjustment amount scope;
or
the target parameter comprises the first position adjustment amount, and the preset condition comprises at least one of the following: a difference between a second position adjustment amount and the first position adjustment amount being within an adjustment difference scope, and a second distance difference corresponding to each ranging value in the set of ranging values being within a preset second distance difference scope, wherein the second distance difference corresponding to the ranging value is a sum of a first distance difference corresponding to the ranging value and the second position adjustment amount, the first distance difference corresponding to the ranging value is a distance difference between the ranging value and a reference distance, and the reference distance is a distance between the calibrated rangefinder (140) and the focal point; and
the method further comprises:
obtaining a first ranging value and a second ranging value for a preset ranging point, the first ranging value being obtained by the rangefinder (140) through ranging of the preset ranging point in the first direction before subjecting the laser galvanometer (130) to the position adjustment in the first direction, and the second ranging value being obtained by the rangefinder (140) through ranging of the preset ranging point in the first direction after subjecting the laser galvanometer (130) to the position adjustment in the first direction; and
determining the second position adjustment amount based on a difference between the second ranging value and the first ranging value.

13. The spot check method according to claim 12, wherein the preset condition comprises: a second defocus amount being within a preset defocus amount scope; and
the method further comprises:
determining the second defocus amount based on a sum of the second position adjustment amount and the first offset.

14. The spot check method according to any one of claims 6 to 13, wherein the method further comprises:
sending a check instruction to the robot (120), the check instruction being used to instruct the robot (120) to drive the rangefinder (140) to move, in the first direction, to a preset check position and then perform ranging of an upper surface (150A, 151A) of a calibration block (150), the calibration block (150) being fixedly disposed in a welding station, and the upper surface (150A, 151A) being at a preset check distance from the check position in the first direction;
obtaining a third ranging value that is obtained by the rangefinder (140) through ranging of the upper surface (150A, 151A); and
determining a check result for the rangefinder (140) based on the third ranging value and the check distance; and
the obtaining a set of ranging values between a rangefinder (140) and at least two posts (210) in a battery product (200) to be welded comprises:
obtaining the set of ranging values between the at least two posts (210) and the rangefinder (140) if the check result represents a check success.

15. The spot check method according to claim 14, wherein the calibration block (150) has a plurality of steps, and in the first direction, an upper surface (150A, 151A) of each of the steps is at a preset check distance from the check position;
the obtaining a third ranging value that is obtained by the rangefinder (140) through ranging of the upper surface (150A, 151A) comprises:
obtaining a third set of ranging values that is obtained by the rangefinder (140) through ranging of the upper surface (150A, 151A) of at least one of the steps; and
the determining a check result for the rangefinder (140) based on the third ranging value and the check distance comprises:
determining the check result for the rangefinder (140) based on the third set of ranging values and the check distance corresponding to the upper surface (150A, 151A) of each of the at least one of the steps.

## Patentansprüche

1. Schweißsystem, umfassend: eine Steuerung (110), einen Roboter (120), ein Lasergalvanometer (130) und einen Entfernungsmesser (140), wobei
sowohl der Entfernungsmesser (140) als auch das Lasergalvanometer (130) mit einem Antriebsende (121) des Roboters (120) auf eine angetriebene Art und Weise verbunden sind und sich der Entfernungsmesser (140) bei einem festen Abstand vom Lasergalvanometer (130) in einer ersten Richtung befindet, wobei die erste Richtung parallel zu einer optischen Achse des Lasergalvanometers (130) ist;
wobei der Roboter (120) dazu ausgelegt ist, den Entfernungsmesser (140) zum Durchführen einer Entfernungsmessung, entlang der ersten Richtung, von mindestens zwei Polen (210) in einem zu schweißenden Batterieprodukt (200) anzutreiben, um einen Satz von Entfernungsmessungswerten zwischen den mindestens zwei Polen (210) und dem Entfernungsmesser (140) zu erhalten; wobei der Entfernungsmesser (140) basierend auf einer ersten Position in die erste Richtung kalibriert wird, wobei die erste Position eine Position eines Fokuspunktes des Lasergalvanometers (130) in die erste Richtung ist;
**dadurch gekennzeichnet, dass**:
die Steuerung (110) ausgelegt ist zum: Bestimmen eines ersten Offsets einer Schweißfläche des Batterieprodukts (200) relativ zu dem Fokuspunkt basierend auf dem Satz von Entfernungsmessungswerten; und Bestimmen eines ersten Positionsanpassungsbetrags für das Lasergalvanometer (130) in der ersten Richtung basierend auf dem ersten Offset und einem ersten Defokussierungsbetrag entsprechend einem aktuellen Schweißprozess; und
wobei der Roboter (120) ferner dazu ausgelegt ist, basierend auf dem ersten Positionsanpassungsbetrag, das Lasergalvanometer (130) anzutreiben, sodass es einer Positionsanpassung in die erste Richtung unterzogen wird; und das positionsangepasste Lasergalvanometer (130) anzutreiben, sodass es sich senkrecht zu der ersten Richtung bewegt, um die mindestens zwei Pole (210) zu schweißen.

2. Schweißsystem nach Anspruch 1, wobei die Steuerung (110) ferner dazu ausgelegt ist, mindestens eine von folgenden Operationen durchzuführen:
Senden, falls ein Zielparameter eine voreingestellte Bedingung erfüllt, einer Schweißanweisung an den Roboter (120), um zu bewirken, dass der Roboter (120) das positionsangepasste Lasergalvanometer (130) antreibt, sodass es sich senkrecht zu der ersten Richtung bewegt, um die mindestens zwei Pole (210) zu schweißen, wobei der Zielparameter mindestens eines des Folgenden umfasst: der Satz von Entfernungsmessungswerten, der erste Offset und der erste Positionsanpassungsbetrag; und
Ausgeben von Aufforderungsinformationen, falls der Zielparameter nicht die voreingestellte Bedingung erfüllt.

3. Schweißsystem nach Anspruch 2, wobei der Zielparameter den ersten Positionsanpassungsbetrag umfasst und die voreingestellte Bedingung mindestens eines des Folgenden umfasst: eine Differenz zwischen einem zweiten Positionsanpassungsbetrag und dem ersten Positionsanpassungsbetrag liegt innerhalb eines Anpassungsdifferenzbereichs, und eine zweite Abstandsdifferenz entsprechend jedem Entfernungsmessungswert im Satz von Entfernungsmessungswerten liegt innerhalb eines voreingestellten zweiten Abstandsdifferenzbereichs, wobei die zweite Abstandsdifferenz entsprechend dem Entfernungsmessungswert eine Summe einer ersten Abstandsdifferenz entsprechend dem Entfernungsmessungswert und dem zweiten Positionsanpassungsbetrag ist, die erste Abstandsdifferenz entsprechend dem Entfernungsmessungswert eine Abstandsdifferenz zwischen dem Entfernungsmessungswert und einem Referenzabstand ist und der Referenzabstand ein Abstand zwischen dem kalibrierten Entfernungsmesser (140) und dem Fokuspunkt ist;
wobei der Roboter (120) ferner ausgelegt ist zum: bevor das Lasergalvanometer (130) der Positionsanpassung in der ersten Richtung unterzogen wird, Antreiben des Entfernungsmessers (140) zum Durchführen einer Entfernungsmessung, entlang der ersten Richtung, eines voreingestellten Entfernungsmessungspunktes, um einen ersten Entfernungsmessungswert zu erhalten; und nachdem das Lasergalvanometer (130) der Positionsanpassung in der ersten Richtung unterzogen wurde, Antreiben des Entfernungsmessers (140) zum Durchführen einer Entfernungsmessung, entlang der ersten Richtung, des voreingestellten Entfernungsmessungspunktes, um einen zweiten Entfernungsmessungswert zu erhalten; und
wobei die Steuerung (110) ferner dazu ausgelegt ist, den zweiten Positionsanpassungsbetrag basierend auf einer Differenz zwischen dem zweiten Entfernungsmessungswert und dem ersten Entfernungsmessungswert zu bestimmen.

4. Schweißsystem nach einem der Ansprüche 1 bis 3, wobei das Schweißsystem ferner einen Kalibrierungsblock (150) umfasst, der fest an einer Schweißstation angeordnet ist, und sich in der ersten Richtung eine obere Oberfläche (150A, 151A) des Kalibrierungsblocks (150) bei einem voreingestellten Prüfabstand von einer voreingestellten Prüfposition befindet;
wobei die Steuerung (110) ferner ausgelegt ist zum: Senden einer Prüfanweisung an den Roboter (120); Erhalten eines dritten Entfernungsmessungswerts, der durch den Entfernungsmesser (140) über Entfernungsmessung der oberen Oberfläche (150A, 151A) des Kalibrierungsblocks (150) erhalten wird; Bestimmen eines Prüfergebnisses für den Entfernungsmesser (140) basierend auf dem dritten Entfernungsmessungswert und dem Prüfabstand; und Erhalten des Satzes von Entfernungsmessungswerten zwischen den mindestens zwei Polen (210) und dem Entfernungsmesser (140), falls das Prüfergebnis einen Prüferfolg repräsentiert; und
wobei der Roboter (120) ferner ausgelegt ist zum: als Reaktion auf die Prüfanweisung, Antreiben des Entfernungsmessers (140), sich in der ersten Richtung zu der Prüfposition zu bewegen und dann eine Entfernungsmessung der oberen Oberfläche (150A, 151A) des Kalibrierungsblocks (150) durchzuführen.

5. Schweißsystem nach Anspruch 4, wobei der Kalibrierungsblock (150) eine Vielzahl von Stufen aufweist, und in die erste Richtung eine obere Oberfläche (150A, 151A) jeder der Stufen bei einem voreingestellten Prüfabstand von der Prüfposition liegt;
wobei die Steuerung (110) ferner ausgelegt ist zum: Erhalten eines dritten Satzes von Entfernungsmessungswerten, der durch den Entfernungsmesser (140) über Entfernungsmessung der oberen Oberfläche (150A, 151A) mindestens einer der Stufen erhalten wird; und Bestimmen eines Prüfergebnisses für den Entfernungsmesser (140) basierend auf dem dritten Satz von Entfernungsmessungswerten und dem Prüfabstand entsprechend der oberen Oberfläche (150A, 151A) von jeder der mindestens einen der Stufen; und
wobei der Roboter (120) ferner ausgelegt ist zum: als Reaktion auf die Prüfanweisung, Antreiben des Entfernungsmessers (140), sich in die erste Richtung zu der Prüfposition zu bewegen und dann die Entfernungsmessung der oberen Oberfläche (150A, 151A) von jeder der mindestens einen der Stufen durchzuführen.

6. Stichprobenverfahren für ein Schweißsystem, wobei das Verfahren durch die folgenden Schritte gekennzeichnet ist:
Erhalten eines Satzes von Entfernungsmessungswerten zwischen einem Entfernungsmesser (140) und mindestens zwei Polen (210) in einem zu schweißenden Batterieprodukt (200), wobei der Satz von Entfernungsmessungswerten durch den Entfernungsmesser (140) über Entfernungsmessung der mindestens zwei Pole (210) entlang einer ersten Richtung erhalten wird, nachdem der Entfernungsmesser (140) basierend auf einer ersten Position in der ersten Richtung kalibriert wird,
wobei die erste Richtung parallel zu einer optischen Achse eines Lasergalvanometers (130) ist, wobei die erste Position eine Position eines Fokuspunktes des Lasergalvanometers (130) in der ersten Richtung ist, und sich der Entfernungsmesser (140) bei einem festen Abstand vom Lasergalvanometer (130) in der ersten Richtung befindet;
Bestimmen eines ersten Offsets einer Schweißfläche des Batterieprodukts (200) relativ zu dem Fokuspunkt basierend auf dem Satz von Entfernungsmessungswerten; und
Bestimmen eines ersten Positionsanpassungsbetrags für das Lasergalvanometer (130) in der ersten Richtung basierend auf dem ersten Offset und einem ersten Defokussierungsbetrags entsprechend einem aktuellen Schweißprozess.

7. Stichprobenverfahren nach Anspruch 6, wobei das Bestimmen eines ersten Offsets einer Schweißfläche des Batterieprodukts (200) relativ zu dem Fokuspunkt basierend auf dem Satz von Entfernungsmessungswerten umfasst:
Bestimmen des ersten Offsets basierend auf einer Differenz zwischen einem ersten statistischen Wert aller Entfernungsmessungswerte in dem Satz von Entfernungsmessungswerten und einem Referenzabstand, wobei der Referenzabstand ein Abstand zwischen dem kalibrierten Entfernungsmesser (140) und dem Fokuspunkt ist, und der erste statistische Wert einen mittleren Bereich und/oder ein erstes statistisches Quantil umfasst.

8. Stichprobenverfahren nach Anspruch 6, wobei das Bestimmen eines ersten Offsets einer Schweißfläche des Batterieprodukts (200) relativ zu dem Fokuspunkt basierend auf dem Satz von Entfernungsmessungswerten umfasst:
Bestimmen von mindestens zwei Sätzen von Polen (210) basierend auf den mindestens zwei Polen (210), wobei jeder der Sätze von Polen (210) mindestens drei Pole (210) umfasst und die mindestens drei Pole (210) in dem Satz von Polen (210) einer Passfläche entsprechen;
für jeden der Sätze von Polen (210), Bestimmen, aus dem Satz von Entfernungsmessungswerten, von Entfernungsmessungswerten der Pole (210) jeweils entsprechend allen Polen (210) in dem Satz von Polen (210), und Bestimmen, basierend auf allen Entfernungsmessungswerten der Pole (210), eines zweiten Offsets der Passfläche entsprechend dem Satz von Polen (210) relativ zu dem Fokuspunkt; und
Bestimmen des ersten Offsets basierend auf allen zweiten Offsets.

9. Stichprobenverfahren nach Anspruch 8, wobei das Bestimmen des ersten Offsets basierend auf allen zweiten Offsets umfasst:
Bestimmen des ersten Offsets basierend auf einem zweiten statistischen Wert aller zweiten Offsets, wobei der zweite statistische Wert einen mittleren Bereich und/oder ein zweites statistisches Quantil umfasst;
und/oder
das Bestimmen, basierend auf allen Entfernungsmessungswerten der Pole (210), eines zweiten Offsets der Passfläche entsprechend dem Satz von Polen (210) relativ zu dem Fokuspunkt umfasst:
Bestimmen eines Maximalwerts in allen Entfernungsmessungswerten der Pole (210);
Bestimmen eines Minimalwerts in allen Entfernungsmessungswerten der Pole (210); und
Bestimmen einer Differenz zwischen dem Maximalwert und dem Minimalwert als der zweite Offset der Passfläche entsprechend dem Satz von Polen (210) relativ zu dem Fokuspunkt.

10. Stichprobenverfahren nach einem der Ansprüche 6 bis 9, wobei das Bestimmen eines ersten Positionsanpassungsbetrags für das Lasergalvanometer (130) in der ersten Richtung basierend auf dem ersten Offset und einem ersten Defokussierungsbetrag entsprechend einem aktuellen Schweißprozess umfasst:
Bestimmen des ersten Positionsanpassungsbetrags für das Lasergalvanometer (130) in der ersten Richtung basierend auf einer Differenz zwischen dem ersten Defokussierungsbetrag und dem ersten Offset;
und/oder
das Verfahren vor dem Erhalten eines Satzes von Entfernungsmessungswerten zwischen einem Entfernungsmesser (140) und mindestens zwei Polen (210) in einem zu schweißenden Batterieprodukt (200) ferner umfasst:
Auswählen von mindestens zwei Polen (210) aus allen Polen (210) des Batterieprodukts (200), wobei die mindestens zwei Pole (210) eine erste Anzahl von Polen (210), die in einer Längenrichtung der Schweißfläche ausgewählt werden, und eine zweite Anzahl von Polen (210), die in einer Breitenrichtung der Schweißfläche ausgewählt werden, umfassen.

11. Stichprobenverfahren nach einem der Ansprüche 6 bis 10, wobei das Verfahren ferner mindestens eine der folgenden Operationen umfasst:
Senden, falls ein Zielparameter eine voreingestellte Bedingung erfüllt, einer Schweißanweisung an einen Roboter (120), um zu bewirken, dass der Roboter (120) das positionsangepasste Lasergalvanometer (130) antreibt, sodass es sich senkrecht zu der ersten Richtung bewegt, um die mindestens zwei Pole (210) zu schweißen, wobei der Zielparameter mindestens eines des Folgenden umfasst: der Satz von Entfernungsmessungswerten, der erste Offset und der erste Positionsanpassungsbetrag; und
Ausgeben von Aufforderungsinformationen, falls der Zielparameter nicht die voreingestellte Bedingung erfüllt.

12. Stichprobenverfahren nach Anspruch 11, wobei
falls der Zielparameter den Satz von Entfernungsmessungswerten umfasst, die voreingestellte Bedingung mindestens eines des Folgenden umfasst: eine Entfernung aller Entfernungsmessungswerte in dem Satz von Entfernungsmessungswerten liegt innerhalb eines voreingestellten Entfernungsmessungsbereichs; und eine erste Abstandsdifferenz entsprechend jedem Entfernungsmessungswert in dem Satz von Entfernungsmessungswerten liegt innerhalb eines ersten Abstandsdifferenzbereichs, wobei die erste Abstandsdifferenz entsprechend dem Entfernungsmessungswert eine Abstandsdifferenz zwischen dem Entfernungsmessungswert und einem Referenzabstand ist, und der Referenzabstand ein Abstand zwischen dem kalibrierten Entfernungsmesser (140) und dem Fokuspunkt ist;
falls der Zielparameter den ersten Offset umfasst, die voreingestellte Bedingung umfasst: der erste Offset liegt innerhalb eines voreingestellten Offsetbereichs; und
falls der Zielparameter den ersten Positionsanpassungsbetrag umfasst, die voreingestellte Bedingung umfasst: der erste Positionsanpassungsbetrag liegt innerhalb eines voreingestellten ersten Anpassungsbetragsbereichs;
oder
der Zielparameter den ersten Positionsanpassungsbetrag umfasst und die voreingestellte Bedingung mindestens eines des Folgenden umfasst: eine Differenz zwischen einem zweiten Positionsanpassungsbetrag und dem ersten Positionsanpassungsbetrag liegt innerhalb eines Anpassungsdifferenzbereichs und eine zweite Abstandsdifferenz entsprechend jedem Entfernungsmessungswert in dem Satz von Entfernungsmessungswerten liegt innerhalb eines voreingestellten zweiten Abstandsdifferenzbereichs, wobei die zweite Abstandsdifferenz entsprechend dem Entfernungsmessungswert eine Summe einer ersten Abstandsdifferenz entsprechend dem Entfernungsmessungswert und dem zweiten Positionsanpassungsbetrag ist, die erste Abstandsdifferenz entsprechend dem Entfernungsmessungswert eine Abstandsdifferenz zwischen dem Entfernungsmessungswert und einem Referenzabstand ist und der Referenzabstand ein Abstand zwischen dem kalibrierten Entfernungsmesser (140) und dem Fokuspunkt ist; und das Verfahren ferner umfasst:
Erhalten eines ersten Entfernungsmessungswerts und eines zweiten Entfernungsmessungswerts für einen voreingestellten Entfernungsmessungspunkt, wobei der erste Entfernungsmessungswert durch den Entfernungsmesser (140) über Entfernungsmessung des voreingestellten Entfernungsmessungspunktes in der ersten Richtung erhalten wird, bevor das Lasergalvanometer (130) der Positionsanpassung in der ersten Richtung unterzogen wird, und der zweite Entfernungsmessungswert durch den Entfernungsmesser (140) über Entfernungsmessung des voreingestellten Entfernungsmessungspunktes in der ersten Richtung erhalten wird, nachdem das Lasergalvanometer (130) der Positionsanpassung in der ersten Richtung unterzogen wird; und
Bestimmen des zweiten Positionsanpassungsbetrags basierend auf einer Differenz zwischen dem zweiten Entfernungsmessungswert und dem ersten Entfernungsmessungswert.

13. Stichprobenverfahren nach Anspruch 12, wobei die voreingestellte Bedingung umfasst:
einen zweiten Defokussierungsbetrag liegt innerhalb eines voreingestellten Defokussierungsbetragsbereichs; und
das Verfahren ferner umfasst:
Bestimmen des zweiten Defokussierungsbetrags basierend auf einer Summe des zweiten Positionsanpassungsbetrags und des ersten Offsets.

14. Stichprobenverfahren nach einem der Ansprüche 6 bis 13, wobei das Verfahren ferner umfasst:
Senden einer Prüfanweisung an den Roboter (120), wobei die Prüfanweisung verwendet wird, um den Roboter (120) anzuweisen, den Entfernungsmesser (140) anzutreiben, um sich in der ersten Richtung zu einer voreingestellten Prüfposition zu bewegen und dann eine Entfernungsmessung einer oberen Oberfläche (150A, 151A) eines Kalibrierungsblocks (150) durchzuführen, wobei der Kalibrierungsblock (150) fest an einer Schweißstation angeordnet ist, und die obere Oberfläche (150A, 151A) bei einem voreingestellten Prüfabstand von der Prüfposition in der ersten Richtung liegt;
Erhalten eines dritten Entfernungsmessungswerts, der durch den Entfernungsmesser (140) über Entfernungsmessung der oberen Oberfläche (150A, 151A) erhalten wird; und
Bestimmen eines Prüfergebnisses für den Entfernungsmesser (140) basierend auf dem dritten Entfernungsmessungswert und dem Prüfabstand; und
das Erhalten eines Satzes von Entfernungsmessungswerten zwischen einem Entfernungsmesser (140) und mindestens zwei Polen (210) in einem zu schweißenden Batterieprodukt (200) umfasst:
Erhalten des Satzes von Entfernungsmessungswerten zwischen den mindestens zwei Polen (210) und dem Entfernungsmesser (140), falls das Prüfergebnis einen Prüferfolg repräsentiert.

15. Stichprobenverfahren nach Anspruch 14, wobei der Kalibrierungsblock (150) eine Vielzahl von Stufen aufweist, und in der ersten Richtung eine obere Oberfläche (150A, 151A) jeder der Stufen bei einem voreingestellten Prüfabstand von der Prüfposition liegt;
wobei das Erhalten eines dritten Entfernungsmessungswerts, der durch den Entfernungsmesser (140) über Entfernungsmessung der oberen Oberfläche (150A, 151A) erhalten wird, umfasst:
Erhalten eines dritten Satzes von Entfernungsmessungswerten, der durch den Entfernungsmesser (140) über Entfernungsmessung der oberen Oberfläche (150A, 151A) mindestens einer der Stufen erhalten wird; und
wobei das Bestimmen eines Prüfergebnisses für den Entfernungsmesser (140) basierend auf dem dritten Entfernungsmessungswert und dem Prüfabstand umfasst:
Bestimmen des Prüfergebnisses für den Entfernungsmesser (140) basierend auf dem dritten Satz von Entfernungsmessungswerten und dem Prüfabstand entsprechend der oberen Oberfläche (150A, 151A) von jeder der mindestens einen der Stufen.

## Revendications

1. Système de soudage, comportant : un dispositif (110) de commande, un robot (120), un galvanomètre laser (130), et un télémètre (140),
le télémètre (140) et le galvanomètre laser (130) étant tous deux liés à une extrémité (121) d'entraînement du robot (120) de manière entraînée, et le télémètre (140) se trouvant à une distance fixe du galvanomètre laser (130) dans une première direction, la première direction étant parallèle à un axe optique du galvanomètre laser (130) ;
le robot (120) étant configuré pour entraîner le télémètre (140) afin d'effectuer une télémétrie, suivant la première direction, d'au moins deux plots (210) dans un produit (200) de batterie à souder, de façon à obtenir un ensemble de valeurs de télémétrie entre lesdits au moins deux plots (210) et le télémètre (140) ; le télémètre (140) étant étalonné sur la base d'une première position dans la première direction, la première position étant une position d'un point focal du galvanomètre laser (130) dans la première direction ;
**caractérisé en ce que** :
le dispositif (110) de commande est configuré pour : déterminer un premier décalage d'une surface de soudage du produit (200) de batterie par rapport au point focal sur la base de l'ensemble de valeurs de télémétrie ; et déterminer une première quantité d'ajustement de position pour le galvanomètre laser (130) dans la première direction d'après le premier décalage et une première quantité de défocalisation correspondant à un processus de soudage actuel ; et
le robot (120) est en outre configuré pour entraîner, sur la base de la première quantité d'ajustement de position, le galvanomètre laser (130) pour qu'il soit soumis à un ajustement de position dans la première direction ; et entraîner le galvanomètre laser (130) ajusté en position pour qu'il se déplace perpendiculairement à la première direction, de façon à souder lesdits au moins deux plots (210).

2. Système de soudage selon la revendication 1, le dispositif (110) de commande étant en outre configuré pour effectuer au moins une opération parmi :
l'envoi, si un paramètre cible satisfait une condition préétablie, d'une instruction de soudage au robot (120) pour amener le robot (120) à entraîner le galvanomètre laser (130) ajusté en position pour qu'il se déplace perpendiculairement à la première direction, de façon à souder lesdits au moins deux plots (210), le paramètre cible comportant au moins un des suivants : l'ensemble de valeurs de télémétrie, le premier décalage, et la première quantité d'ajustement de position ; et
la délivrance d'informations de sollicitation si le paramètre cible ne satisfait pas la condition préétablie.

3. Système de soudage selon la revendication 2, le paramètre cible comportant la première quantité d'ajustement de position, et la condition préétablie comportant au moins une des suivantes : une différence entre une deuxième quantité d'ajustement de position et la première quantité d'ajustement de position se situe à l'intérieur d'une plage de différence d'ajustement, et une deuxième différence de distance correspondant à chaque valeur de télémétrie dans l'ensemble de valeurs de télémétrie se situe à l'intérieur d'une plage préétablie de deuxième différence de distance, la deuxième différence de distance qui correspond à la valeur de télémétrie étant une somme d'une première différence de distance correspondant à la valeur de télémétrie et de la deuxième quantité d'ajustement de position, la première différence de distance qui correspond à la valeur de télémétrie étant une différence de distance entre la valeur de télémétrie et une distance de référence, et la distance de référence étant une distance entre le télémètre (140) étalonné et le point focal ;
le robot (120) étant en outre configuré pour : avant de soumettre le galvanomètre laser (130) à l'ajustement de position dans la première direction, entraîner le télémètre (140) pour effectuer une télémétrie, suivant la première direction, d'un point de télémétrie préétabli, de façon à obtenir une première valeur de télémétrie ; et après avoir soumis le galvanomètre laser (130) à l'ajustement de position dans la première direction, entraîner le télémètre (140) pour effectuer une télémétrie, suivant la première direction, du point de télémétrie préétabli, de façon à obtenir une deuxième valeur de télémétrie ; et
le dispositif (110) de commande étant en outre configuré pour déterminer la deuxième quantité d'ajustement de position sur la base d'une différence entre la deuxième valeur de télémétrie et la première valeur de télémétrie.

4. Système de soudage selon l'une quelconque des revendications 1 à 3, le système de soudage comportant en outre un bloc (150) d'étalonnage disposé de manière fixe dans un poste de soudage, et dans la première direction, une surface supérieure (150A, 151A) du bloc (150) d'étalonnage se trouvant à une distance de contrôle préétablie d'une position de contrôle préétablie ;
le dispositif (110) de commande étant en outre configuré pour : envoyer une instruction de contrôle au robot (120) ; obtenir une troisième valeur de télémétrie qui est obtenue par le télémètre (140) via une télémétrie de la surface supérieure (150A, 151A) du bloc (150) d'étalonnage ; déterminer un résultat de contrôle pour le télémètre (140) d'après la troisième valeur de télémétrie et la distance de contrôle ; et obtenir l'ensemble de valeurs de télémétrie entre lesdits au moins deux plots (210) et le télémètre (140) si le résultat de contrôle représente un contrôle réussi ; et
le robot (120) étant en outre configuré pour : en réponse à l'instruction de contrôle, entraîner le télémètre (140) pour qu'il se déplace, dans la première direction, jusqu'à la position de contrôle, puis effectue une télémétrie de la surface supérieure (150A, 151A) du bloc (150) d'étalonnage.

5. Système de soudage selon la revendication 4, le bloc (150) d'étalonnage présentant une pluralité de marches et, dans la première direction, une surface supérieure (150A, 151A) de chacune des marches se trouvant à une distance de contrôle préétablie de la position de contrôle ; le dispositif (110) de commande étant en outre configuré pour : obtenir un troisième ensemble de valeurs de télémétrie qui est obtenue par le télémètre (140) via une télémétrie de la surface supérieure (150A, 151A) d'au moins une des marches ; et déterminer un résultat de contrôle pour le télémètre (140) sur la base du troisième ensemble de valeurs de télémétrie et de la distance de contrôle correspondant à la surface supérieure (150A, 151A) de la ou de chacune des marches ; et
le robot (120) étant en outre configuré pour : en réponse à l'instruction de contrôle, entraîner le télémètre (140) pour qu'il se déplace, dans la première direction, jusqu'à la position de contrôle, puis effectue la télémétrie de la surface supérieure (150A, 151A) de la ou de chacune des marches.

6. Procédé de contrôle ponctuel pour un système de soudage, le procédé étant **caractérisé par** les étapes suivantes :
obtention d'un ensemble de valeurs de télémétrie entre un télémètre (140) et au moins deux plots (210) dans un produit (200) de batterie à souder, l'ensemble de valeurs de télémétrie étant obtenu par le télémètre (140) via une télémétrie desdits au moins deux plots (210) suivant une première direction après que le télémètre (140) a été étalonné sur la base d'une première position dans la première direction, la première direction étant parallèle à un axe optique d'un galvanomètre laser (130), la première position étant une position d'un point focal du galvanomètre laser (130) dans la première direction, et le télémètre (140) se trouvant à une distance fixe du galvanomètre laser (130) dans la première direction ;
détermination d'un premier décalage d'une surface de soudage du produit (200) de batterie par rapport au point focal sur la base de l'ensemble de valeurs de télémétrie ; et
détermination d'une première quantité d'ajustement de position pour le galvanomètre laser (130) dans la première direction sur la base du premier décalage et d'une première quantité de défocalisation correspondant à un processus de soudage actuel.

7. Procédé de contrôle ponctuel selon la revendication 6, la détermination d'un premier décalage d'une surface de soudage du produit (200) de batterie par rapport au point focal sur la base de l'ensemble de valeurs de télémétrie comportant :
la détermination du premier décalage sur la base d'une différence entre une première valeur statistique de toutes les valeurs de télémétrie dans l'ensemble de valeurs de télémétrie et d'une distance de référence, la distance de référence étant une distance entre le télémètre (140) étalonné et le point focal, et la première valeur statistique comportant un milieu de l'étendue et/ou un premier quantile statistique.

8. Procédé de contrôle ponctuel selon la revendication 6, la détermination d'un premier décalage d'une surface de soudage du produit (200) de batterie par rapport au point focal sur la base de l'ensemble de valeurs de télémétrie comportant :
la détermination d'au moins deux ensembles de plots (210) sur la base desdits au moins deux plots (210), chacun des ensembles de plots (210) comportant au moins trois plots (210), et lesdits au moins trois plots (210) de l'ensemble de plots (210) correspondant à une seule surface de montage ;
pour chacun des ensembles de plots (210), la détermination, à partir de l'ensemble de valeurs de télémétrie, de valeurs de télémétrie de plots (210) correspondant respectivement à tous les plots (210) de l'ensemble de plots (210), et la détermination, sur la base de toutes les valeurs de télémétrie de plots (210), d'un deuxième décalage de la surface de montage correspondant à l'ensemble de plots (210) par rapport au point focal ; et
la détermination du premier décalage sur la base de tous les deuxièmes décalages.

9. Procédé de contrôle ponctuel selon la revendication 8, la détermination du premier décalage sur la base de tous les deuxièmes décalages comportant :
la détermination du premier décalage sur la base d'une deuxième valeur statistique de tous les deuxièmes décalages, la deuxième valeur statistique comportant un milieu de l'étendue et/ou un deuxième quantile statistique ;
et/ou
la détermination, sur la base de toutes les valeurs de télémétrie de plots (210), d'un deuxième décalage de la surface de montage correspondant à l'ensemble de plots (210) par rapport au point focal comportant :
la détermination d'une valeur maximum parmi toutes les valeurs de télémétrie de plots (210) ;
la détermination d'une valeur minimum parmi toutes les valeurs de télémétrie de plots (210) ; et
la détermination d'une différence entre la valeur maximum et la valeur minimum comme étant le deuxième décalage de la surface de montage qui correspond à l'ensemble de plots (210) par rapport au point focal.

10. Procédé de contrôle ponctuel selon l'une quelconque des revendications 6 à 9, la détermination d'une première quantité d'ajustement de position pour le galvanomètre laser (130) dans la première direction sur la base du premier décalage et d'une première quantité de défocalisation qui correspond à un processus de soudage actuel comportant :
la détermination de la première quantité d'ajustement de position pour le galvanomètre laser (130) dans la première direction sur la base d'une différence entre la première quantité de défocalisation et le premier décalage ;
et/ou
le procédé comportant en outre, avant l'obtention d'un ensemble de valeurs de télémétrie entre un télémètre (140) et au moins deux plots (210) dans un produit (200) de batterie à souder :
la sélection desdits au moins deux plots (210) parmi tous les plots (210) du produit (200) de batterie, lesdits au moins deux plots (210) comportant un premier nombre de plots (210) sélectionnés dans une direction de longueur de la surface de soudage, et un deuxième nombre de plots (210) sélectionnés dans une direction de largeur de la surface de soudage.

11. Procédé de contrôle ponctuel selon l'une quelconque des revendications 6 à 10, le procédé comportant en outre au moins une opération parmi :
l'envoi, si un paramètre cible satisfait une condition préétablie, d'une instruction de soudage à un robot (120) pour amener le robot (120) à entraîner le galvanomètre laser (130) ajusté en position pour qu'il se déplace perpendiculairement à la première direction, de façon à souder lesdits au moins deux plots (210), le paramètre cible comportant au moins un des suivants : l'ensemble de valeurs de télémétrie, le premier décalage, et la première quantité d'ajustement de position ; et
la délivrance d'informations de sollicitation si le paramètre cible ne satisfait pas la condition préétablie.

12. Procédé de contrôle ponctuel selon la revendication 11,
la condition préétablie comportant au moins une des suivantes si le paramètre cible comporte l'ensemble de valeurs de télémétrie : une étendue de toutes les valeurs de télémétrie dans l'ensemble de valeurs de télémétrie se situe à l'intérieur d'une plage d'étendue préétablie ; et une première différence de distance correspondant à chaque valeur de télémétrie dans l'ensemble de valeurs de télémétrie se situe à l'intérieur d'une plage préétablie de première différence de distance, la première différence de distance qui correspond à la valeur de télémétrie étant une différence de distance entre la valeur de télémétrie et une distance de référence, et la distance de référence étant une distance entre le télémètre (140) étalonné et le point focal ;
la condition préétablie comportant, si le paramètre cible comporte le premier décalage : le fait que le premier décalage se situe à l'intérieur d'une plage préétablie de décalage ; et
la condition préétablie comportant, si le paramètre cible comporte la première quantité d'ajustement de position: le fait que la première quantité d'ajustement de position se situe à l'intérieur d'une plage préétablie de première quantité d'ajustement ;
ou
le paramètre cible comportant la première quantité d'ajustement de position, et la condition préétablie comportant au moins une des suivantes : une différence entre une deuxième quantité d'ajustement de position et la première quantité d'ajustement de position se situe à l'intérieur d'une plage de différence d'ajustement, et une deuxième différence de distance correspondant à chaque valeur de télémétrie dans l'ensemble de valeurs de télémétrie se situe à l'intérieur d'une plage préétablie de deuxième différence de distance, la deuxième différence de distance qui correspond à la valeur de télémétrie étant une somme d'une première différence de distance correspondant à la valeur de télémétrie et de la deuxième quantité d'ajustement de position, la première différence de distance qui correspond à la valeur de télémétrie étant une différence de distance entre la valeur de télémétrie et une distance de référence, et la distance de référence étant une distance entre le télémètre (140) étalonné et le point focal ; et
le procédé comportant en outre :
l'obtention d'une première valeur de télémétrie et d'une deuxième valeur de télémétrie pour un point de télémétrie préétabli, la première valeur de télémétrie étant obtenue par le télémètre (140) via une télémétrie du point de télémétrie préétabli dans la première direction avant de soumettre le galvanomètre laser (130) à l'ajustement de position dans la première direction, et la deuxième valeur de télémétrie étant obtenue par le télémètre (140) via une télémétrie du point de télémétrie préétabli dans la première direction après avoir soumis le galvanomètre laser (130) à l'ajustement de position dans la première direction ; et
la détermination de la deuxième quantité d'ajustement de position sur la base d'une différence entre la deuxième valeur de télémétrie et la première valeur de télémétrie.

13. Procédé de contrôle ponctuel selon la revendication 12, la condition préétablie comportant : le fait qu'une deuxième quantité de défocalisation se situe à l'intérieur d'une plage préétablie de quantité de défocalisation ; et
le procédé comportant en outre :
la détermination de la deuxième quantité de défocalisation sur la base d'une somme de la deuxième quantité d'ajustement de position et du premier décalage.

14. Procédé de contrôle ponctuel selon l'une quelconque des revendications 6 à 13, le procédé comportant en outre :
l'envoi d'une instruction de contrôle au robot (120), l'instruction de contrôle étant utilisée pour enjoindre au robot (120) d'entraîner le télémètre (140) pour qu'il se déplace, dans la première direction, jusqu'à une position de contrôle préétablie, puis effectue une télémétrie d'une surface supérieure (150A, 151A) d'un bloc (150) d'étalonnage, le bloc (150) d'étalonnage étant disposé de manière fixe dans un poste de soudage, et la surface supérieure (150A, 151A) se trouvant à une distance de contrôle préétablie de la position de contrôle dans la première direction ;
l'obtention d'une troisième valeur de télémétrie qui est obtenue par le télémètre (140) via une télémétrie de la surface supérieure (150A, 151A) ; et
la détermination d'un résultat de contrôle pour le télémètre (140) d'après la troisième valeur de télémétrie et la distance de contrôle ; et
l'obtention d'un ensemble de valeurs de télémétrie entre un télémètre (140) et au moins deux plots (210) dans un produit (200) de batterie à souder comportant :
l'obtention de l'ensemble de valeurs de télémétrie entre lesdits au moins deux plots (210) et le télémètre (140) si le résultat de contrôle représente un contrôle réussi.

15. Procédé de contrôle ponctuel selon la revendication 14, le bloc (150) d'étalonnage présentant une pluralité de marches, et dans la première direction, une surface supérieure (150A, 151A) de chacune des marches se trouvant à une distance de contrôle préétablie de la position de contrôle ;
l'obtention d'une troisième valeur de télémétrie qui est obtenue par le télémètre (140) via une télémétrie de la surface supérieure (150A, 151A) comportant :
l'obtention d'un troisième ensemble de valeurs de télémétrie qui est obtenue par le télémètre (140) via une télémétrie de la surface supérieure (150A, 151A) d'au moins une des marches ; et
la détermination d'un résultat de contrôle pour le télémètre (140) d'après la troisième valeur de télémétrie et la distance de contrôle comportant :
la détermination du résultat de contrôle pour le télémètre (140) sur la base du troisième ensemble de valeurs de télémétrie et de la distance de contrôle correspondant à la surface supérieure (150A, 151A) de la ou de chacune des marches.
